# EUROPEAN PATENT SPECIFICATION

(11) **EP 0 638 950 B1**
(45) Date of publication and mention of the grant of the patent: **12.03.1997**
(21) Application number: 93202378.1
(22) Date of filing: 13.08.1993
(51) Int. Cl.: H01M 6/18

(54) **Process for preparing a solid, polymeric electrolyte based on polyvinyl ethers**
Verfahren zur Herstellung von festem Polymerelektrolyt auf Basis von Polyvinylethern
Procédé de préparation d'un électrolyte solide polymère à base de polyvinyléthers

(43) Date of publication of application: 15.02.1995
(73) Proprietor: ENIRICERCHE S.p.A., I-20121 Milan (IT)
(72) Inventor: Marchese, Luca, 20134 Milano (IT); Andrei, Maria, 43042 Berceto Parma (IT); Roggero, Arnaldo, 20097 San Donato Milanese Milano (IT)
(74) Representative: Fusina, Gerolamo

(56) References cited:
- EP-A- 0 301 774
- EP-A- 0 312 160

## Description

The present invention relates to a process for preparing a solid, polymeric electrolyte, to said solid, polymeric electrolyte and to its use in electrochemical devices which contain it.

The solid, polymeric electrolytes consist of a solid solution of an ionic compound in a solid polymeric matrix deriving from the polymerization of monomers containing a heteroatom, preferably oxygen.

The most widely diffused solid polymeric electrolytes are those based on a polyethylene oxide, or on another polyether, such as, for example, those as disclosed in U.S. 4,471,037; FR 2,523,769; FR 2,568,574; and EP 13,199.

Such materials display interesting values of ionic conductivity only at relatively high temperatures, at which they unfortunately display a low mechanical strength: they are consequently not really interesting for such practical uses as electrolytic separators in electrochemical devices, optical and electrochromic display and in sensors.

In U.S. Patent No. 5,173,205 and IT 1,222,929 particular polymeric polyvinyl ether-based electrolytes are disclosed which display both an improved mechanical strength and a satisfactory conductivity even at relatively low temperatures.

Preparing such materials requires complex multistep processes comprising the copolymerization of suitable vinyl ethers at a temperature of the order of -75/-80°C for a time comprised within the range of from 30 to 60 minutes, dissolving the resulting solid, crosslinked polyvinyl ether in a suitable solvent, blending said solution with a solution containing an ionic compound and evaporating the solvent in order to obtain a membrane.

In U.S. Patent No. 5,173,205, , the suitably functionalized polyvinyl ether is crosslinked by means of a diprotic crosslinker agent during the step of polymer blending with the ionic compound. This step is followed by solvent evaporation in order to obtain the membrane.

We have found now a process for preparing solid, polymeric electrolytes based on polyvinyl ethers, which process does not require the just described complex multi-step processes.

Such a process consists in polymerizing and crosslinking suitable vinyl ethers in an organic solvent, directly in the presence of an ionic compound and possibly in the presence of an oligomer or of a dipolar aprotic liquid.

The solid, polymeric electrolytes obtained according to the process of the present invention in the presence of a dipolar liquid supply improved performance over the polivinyl ethers known from the prior art as regards the mechanical strength and the electrical conductivity. Furthermore, such membranes result to be easily handeable and display good adhesive properties. Therefore, the subject-matter of the present invention is a process for preparing a solid, polyvinyl ether-based polymeric electrolyte in the form of a membrane, which comprises the steps of:
(1) ) preparing a mixture (B) which contains:
   (a) a vinyl ether of formula

      R-[-O-CH₂-CH₂-]ₙ-O-CH=CH₂ (I)

      wherein R = methyl or ethyl and n is an integer comprised within the range of from 1 to 16;
   (b) a divinyl ether of formula

      CH₂=CH-[-O-CH₂-CH₂-]ₘ-O-CH=CH₂ (II)

      wherein m is an integer comprised within the range of from 1 to 10, in a molar ratio to the vinyl ether (I) comprised within the range of from 2 to 98 to 60:40;
(2) preparing a mixture (A), which contains:
   (c) lithium tetrafluoroborate, as an ionic compound, in an amount comprised within the range of from 1 to 30 % by weight of a mixture (11) to be formed at step (3);
   (d) an oligomer selected from the oligovinyl ethers deriving from monomers of type (I), from ethylene-oxide-sequence-containing oligomers or from oligoethylene glycol dialkyl ethers, or a dipolar aprotic liquid in an amount comprised within the range of from 50 to 80% by weight of a mixture (11) to be formed at step (3);
(3) adding mixture (A) to mixture (B), to form mixture (M);
(4) applying the above mixture (M) onto an inert support and
(5) polymerising the mixture (M) for a time comprised within the range of from 0.5 to 30 hours, to form the polymeric electrolyte.

The polymerization step (5) can be accomplished by exposing the resulting mixture from step (3), after applying it onto an inert support, to a source of ultraviolet light. In that case, the mixture (M) will also contain a photoinitiator. Such a photoinitiator is of cationic type and can be, e.g., a diaryliodonium, triarylsulfonium, sulfoxonium salt, or a metal ferrocene salt. The photoinitiator is used in an amount comprised within the range of from 0.5 to 10% by weight, preferably of from 1 to 5% by weight.

The polymerization step (5) can also be advantageously accomplished by exposing the mixture, applied onto an inert support, to an electron beam ray source. In this case, the presence of a photoinitiator is not required.

The present Applicant found, therefore, that, if, as the ionic compound (c), lithium tetrafluoroborate is used and the mixture (M) is prepared in the step (3) by adding the components according to a suitable sequence, the polymerization of the step (5) takes place spontaneously. Therefore, is this case, neither the exposure to an U.V. light source in the presence of a photoinitiator, nor the exposure to an electron beam ray source, will be necessary in order to achieve the polymerization.

The polymerization time varies as a function of the composition of the mixture, and of the type of plasticizer used. In particular, it decreases with increasing LiBF₄ concentration, and when propylene carbonate is used as the dipolar aprotic liquid. The membranes obtained according to this particular aspect of the present invention result to be very easily handeable and display extremely good adhesive properties.

In general, according to the present invention, in the step (1) the molar ratio of the divinyl ether (II) to the vinyl ether (I) is preferably comprised within the range of from 8:92 to 20:80, in the step (2) the amount of ionic compound is comprised within the range of from 5 to 20% by weight, and the amount of dipolar aprotic liquid is comprised within the range of from 50 to 80% by weight. The vinyl ether (I) can be prepared by reacting ethyl vinyl ether:

CH₃-CH₂-O-CH=CH₂ (III)

with a polyoxyethylene glycol monoether, which may be represented with the formula:

RO-(-CH₂-CH₂-O-)ₙ-H (IV)

wherein R and n have the same meaning as reported hereinabove with regard to formula (I).

The reaction is carried out in the liquid phase, with an excess of compound (III) relatively to the compound (IV), preferably at the reaction mixture refluxing temperature under room pressure and in the presence of a transesterification catalyst. Specific examples of catalysts suitable for the intended purpose are mercury-(II) salts.

The divinyl ether (II) can be prepared by reacting a vinyl ether (III) with a polyoxyethylene glycol of formula:

HO-(-CH₂-CH₂-O-)ₘ-H

wherein m has the same meaning as indicated hereinabove with regard to formula (II), under similar conditions to those as reported hereinabove for the preparation of the vinyl ether (I).

The ionic compound used in the step (2) is a salt consisting of lithium tetrafluoroborate and when n=5 and m=4 or when n=3 and m=3 the salt is selected among, a perchlorate, triflate, tetrafluoroborate or hexafluoroarsenate, used in such an amount as to yield an atomic ratio of oxygen contained in the polyvinyl ether to the metal, comprised within the range of from approximately 4:1 to approximately 25:1.

The dipolar aprotic liquid preferably is: propylene carbonate, ethylene carbonate, gammabutyrolactone, acetonitrile and mixtures thereof.

The oligomer can be selected from the oligovinyl ethers deriving from monomers of type (I), from ethylene-oxide-sequence-containing oligomers, such as polyethylene glycol, or from oligoethylene glycol dialkyl ethers, such as tetraglyme.

The mixture (M) of the step (3) is generally prepared by mixing the components and stirring until a colourless, homogeneous solution is obtained. In the particular case where the ionic compound used is LiBF₄, the mixture (M) is prepared by adding a mixture (A), containing the components (c) and (d), to a mixture (B) containing the components (a) and (b).

In the step (4), the support may be a film of an inert plastics material, such as, e.g., teflon, polyethylene and Mylar, (TM) it may be glass, or it may directly be the surface of a lithium anode or of a composite cathode constituted by an oxide or sulfide of a transition metal. In the latter case, said polymeric electrolyte may also constitute the ionically conductive polymeric component used in the formulation of the composite cathod.

The polymerization process is rather fast, starts with irradiation, but can continue even with no further exposure to U.V. light, and it can be accelerated by thermal way, by heating at a temperature of round 50°C.

A solid, polymeric electrolyte is obtained as a membrane having a thickness of the order of 50-200 microns.

In particular, when in the process disclosed above, the component (d) is a dipolar aprotic liquid in an amount comprised within the range of from 50 to 80% by weight, the obtained electrolyte is mechanically stronger, dimensionally stabler and displays a higher conductivity, even at fairly low temperatures, as compared to the polymeric polyvinyl ether-based electrolytes known from the prior art.

The following experimental Examples are illustrative and do not limit the purview of the present invention.

### Example 1

### Preparation of an electrolytic membrane by starting from a vinyl ether of formula (I) with n = 2 and a divinyl ether of formula (II) with m = 4.

Inside a glove-box, under an argon atmosphere, the following components were mixed together with each other:

| Component | Weight (g) | % by weight |
|---|---|---|
| Vinyl ether (I) | 2.00 | 59.9 |
| Divinyl ether (II) | 0,27 | 8.1 |

| Component | Weight (g) | % by weight |
|---|---|---|
| LiClO₄ | 0.33 | 9.9 |
| Propylene carbonate | 0.71 | 21.2 |
| Photoinitiator | 0.03 | 0.9 |

wherein the photoinitiator is bis(4-diphenylsulfoniumphenyl)sulfide-bis-hexafluorophosphate. The mixture was stirred with a magnetic drive stirrer until a homogeneous, colourless solution was obtained which was then coated as a constant-thickness film on a PTFE sheet by using a bar Hand Coater.

The resulting film was exposed to U.V. light for 5 seconds, by means of a medium pressure mercury vapour lamp. The mixture was then heated for a few minutes at 40-50°C.

In that way, a homogeneous, colourless electrolytic membrane was obtained in handeable film form, with good adhesion properties and having a thickness of 100 microns.

The ionic conductivity at room temperature, as measured by placing the membrane between two fastening steel electrodes, resulted to be of approximately 1.3 x 10⁻⁵ S/cm.

### Example 2

### Preparation of an electrolytic membrane by starting from a vinyl ether of formula (I), with n = 5 and R = methyl, and a divinyl ether of formula (II) with m = 4.

Inside a glove-box, under an argon atmosphere, the following components were mixed together with each other:

| Component | Weight (g) | % by weight |
|---|---|---|
| Vinyl ether (I) | 2.03 | 33.8 |
| Divinyl ether (II) | 0.53 | 8.8 |
| LiClO₄ | 0.354 | 5.9 |
| Propylene carbonate | 3.042 | 50.7 |
| Photoinitiator | 0.048 | 0.8 |

wherein the photoinitiator is bis(4-diphenylsulfoniumphenyl)sulfide-bis-hexafluorophosphate. The mixture was stirred with a magnetic drive stirrer until a homogeneous, colourless solution was obtained, which was then coated as a constant-thickness film on a PTFE sheet by using a bar Hand Coater for thickness control.

The resulting film was exposed to U.V. light for 5 seconds, using a medium pressure mercury vapour lamp.

In that way, a homogeneous, colourless electrolytic membrane is obtained, in handeable film form, which displays good adhesive properties and has a thickness of 100 microns.

The glass transition temperature (Tg) of the membrane, as determined by DSC, is of -83°C and the membrane is completely amorphous at higher temperatures than its Tg; in fact, no crystallization peaks are detected.

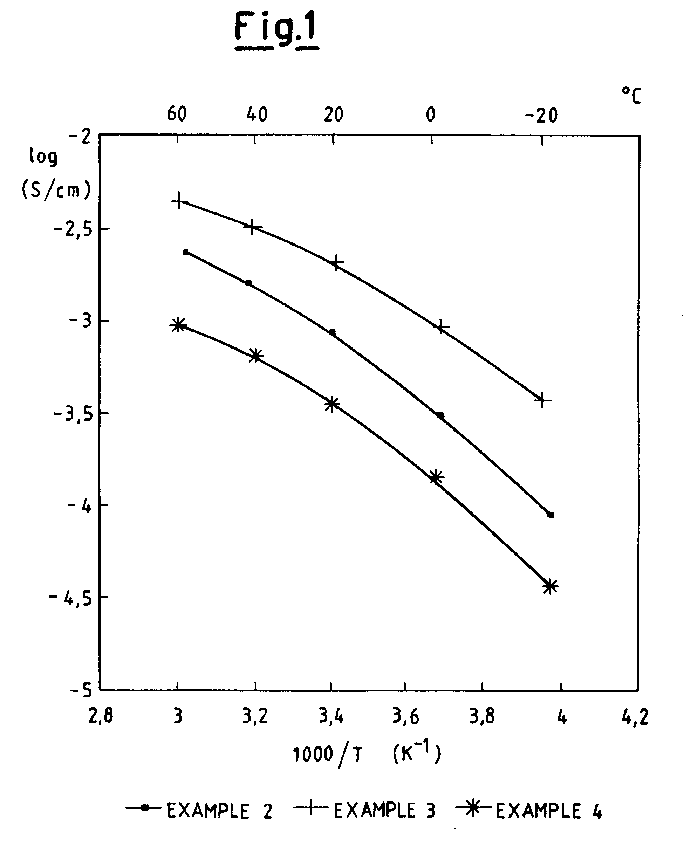

The behaviour of the ionic conductivity as a function of temperature, as measured by placing the membrane between two fastening steel electrodes, is reported in Figure 1. In particular, the ionic conductivity at room temperature results to be of approximately 8.7 × 10⁻⁴ S/cm.

### Example 3

### Preparation of an electrolytic membrane by starting from a vinyl ether of formula (I), with n = 3 and R = methyl, and a divinyl ether of formula (II) with m = 3.

Inside a glove-box, under an argon atmosphere, the following components were mixed together with each other:

| Component | Weight (g) | % by weight |
|---|---|---|
| Vinyl ether (I) | 1.266 | 21.1 |
| Divinyl ether (II) | 0.540 | 9.0 |
| LiClO₄ | 0.246 | 4.1 |
| Propylene carbonate | 3.900 | 65 |
| Photoinitiator | 0.048 | 0.8 |

wherein the photoinitiator is bis(4-diphenylsulfonium-phenyl)-sulfide-bis-hexafluorophosphate.

The mixture was stirred with a magnetic drive stirrer until a homogeneous, colourless solution was obtained, which was then coated as a constant-thickness film on a PTFE sheet by using a bar Hand Coater for thickness control.

The resulting film was exposed to U.V. light for 5 seconds, using a medium pressure mercury vapour lamp.

In that way, a homogeneous, colourless electrolytic membrane is obtained, in handeable film form, which displays good adhesive properties and has a thickness of 100 microns.

The glass transition temperature (Tg) of the membrane, as determined by DSC, is of -100°C. Furthermore, the membrane results to be completely amorphous at higher temperatures than its Tg.

The behaviour of the ionic conductivity as a function of temperature, as measured by placing the membrane between two fastening steel electrodes, is reported in Figure 1. In particular, the ionic conductivity at room temperature results to be of 2.09 x 10⁻³ S/cm.

### Example 4

### Preparation of an electrolytic membrane by starting from a vinyl ether of formula (I), with n = 3 and R = methyl, and a divinyl ether of formula (II) with m = 3, using tetraethylene glycol dimethyl ether (TGME) as the plasticizer in lieu of propylene carbonate.

Inside a glove-box, under an argon atmosphere, the following components were mixed together with each other:

| Component | Weight (g) | % by weight |
|---|---|---|
| Vinyl ether (I) | 2.040 | 34 |
| Divinyl ether (II) | 0.540 | 9.0 |
| LiClO₄ | 0.354 | 5.9 |
| TGME | 3.018 | 50.3 |
| Photoinitiator | 0.048 | 0.8 |

wherein the photoinitiator is bis(4-diphenylsulfonium-phenyl)-sulfide-bis-hexafluorophosphate.

The mixture was stirred with a magnetic drive stirrer until a homogeneous, colourless solution was obtained, which was then coated as a constant-thickness film on a PTFE sheet by using a bar Hand Coater for thickness control.

The resulting film was exposed to U.V. light for 5 seconds, using a medium pressure mercury vapour lamp.

In that way, a homogeneous, colourless electrolytic membrane is obtained, in handeable film form, which displays good adhesive properties and has a thickness of 100 microns.

The glass transition temperature (Tg) of the membrane, as determined by DSC, is of -86°C, and the membrane results to be completely amorphous at higher temperatures than its Tg.

The behaviour of the ionic conductivity as a function of temperature, as measured by placing the membrane between two fastening steel electrodes, is reported in Figure 1. In particular, the conductivity at room temperature results to be of 3.55 x 10⁻⁴ S/cm.

### Examples 5

### Preparation of an electrolytic membrane by starting from a vinyl ether of formula (I), with n = 3 and R = ethyl, and a divinyl ether of formula (II) with n = 3. As the ionic compound, LiBF₄ is used (98%, Aldrich)

Inside a glove-box, under an argon atmosphere, two mixtures were prepared and were made homogenize, which had the following composition:

### Mixture (A)

| Component | Weight (g) | % by weight |
|---|---|---|
| LiBF₄ | 302 | 5.03 |
| Propylene carbonate | 3750 | 62.5 |

### Mixture (B)

| Component | Weight (g) | % by weight |
|---|---|---|
| Vinyl ether (I) | 1345 | 22.42 |
| Divinyl ether (II) | 603 | 10.05 |

The homogeneous mixture (A) is added to the homogeneous mixture (B).

The resulting solution was then coated, as a constant-thickness film on a PTFE sheet. Crosslinking went to completion within approximately 8 hours.

The resulting electrolytic membrane is homogeneous and colourless, and is an easily handeable film, which displays very good adhesive properties and has a thickness of approximately 100 microns.

The glass transition temperature (Tg) of the membrane, as determined by DSC, is of -101°C, and the membrane results to be completely amorphous.

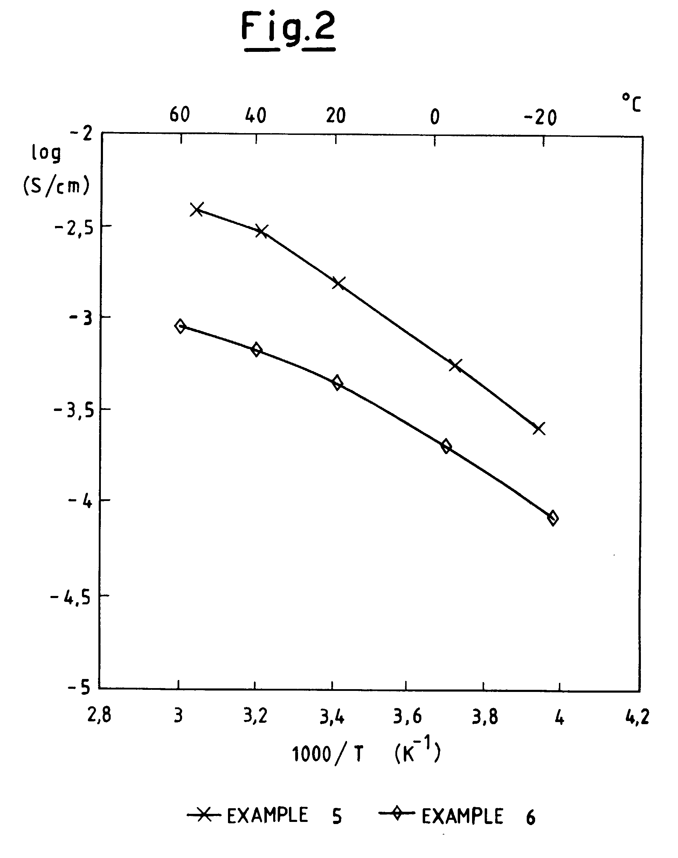

The behaviour of the ionic conductivity as a function of temperature, as measured by placing the membrane between two fastening steel electrodes, is reported in Figure 2. In particular, the conductivity at room temperature results to be of 1.55 x 10⁻³ S/cm.

### Example 6

### Preparation of an electrolytic membrane by starting from a vinyl ether of formula (I), with n = 3 and R = ethyl, and a divinyl ether of formula (II) with m = 3. As the ionic compound, LiBF₄ is used (98%, Aldrich).

Inside a glove-box, under an argon atmosphere, two mixtures were prepared and were made homogenize, which had the following composition:

### Mixture (A)

| Component | Weight (g) | % by weight |
|---|---|---|
| LiBF₄ | 288 | 4.8 |
| TGME | 3750 | 62.5 |

### Mixture (B)

| Component | Weight (g) | % by weight |
|---|---|---|
| Vinyl ether (I) | 1347 | 22.45 |
| Divinyl ether (II) | 614 | 10.23 |

The homogeneous mixture (A) is added to the homogeneous mixture (B).

The resulting solution was coated, as a constant-thickness film, on a PTFE support. Crosslinking went to completion within approximately 16 hours.

The resulting electrolytic membrane is homogeneous and colourless, is easily handeable with very good adhesive properties, and has a thickness of approximately 100 microns.

The glass transition temperature (Tg) of the membrane, as determined by DSC, is of -99°C, and its Tm is of -38°C.

The behaviour of the ionic conductivity as a function of temperature, as measured by placing the membrane between two fastening steel electrodes, is reported in Figure 2. In particular, the ionic conductivity at room temperature results to be of 4.4 x 10⁻⁴ S/cm.

### Example 7 (Comparison example)

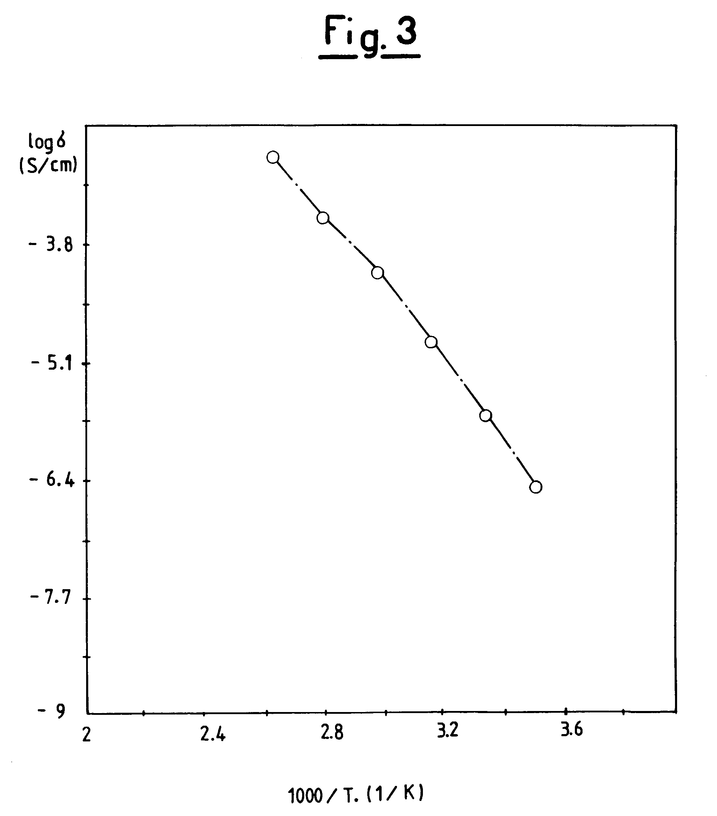

A polyvinyl ether-based electrolytic membrane is prepared as disclosed in IT 1,222,929. The electrical conductivity of the resulting membrane is measured in a cell provided with two simmetrical steel electrodes between which the membrane is housed. The results from this determination are reported in the graph of Figure 3. By comparing the results shown in Figure 1, in Figure 2 and in Figure 3, one may observe that the polymeric electrolytes of the present invention have a higher electrical conductivity than those based on polyvinyl ethers known from the prior art, and that such improved performance is less sensitive to temperature changes.

## Claims

1. Process for preparing a solid, polyvinyl ether-based polymeric electrolyte in the form of a membrane, which comprises the steps of:
(1) preparing a mixture (B) which contains:
(a) a vinyl ether of formula
R-[-O-CH₂-CH₂-]ₙ-O-CH=CH₂ (I)
wherein R = methyl or ethyl and n is an integer comprised within the range of from 1 to 16;
(b) a divinyl ether of formula
CH₂=CH-[-O-CH₂-CH₂-]ₘ-O-CH=CH₂ (II)
wherein m is an integer comprised within the range of from 1 to 10, in a molar ratio to the vinyl ether (I) comprised within the range of from 2 to 98 to 60:40;
(2) preparing a mixture (A), which contains:
(c) lithium tetrafluoroborate, as an ionic compound, in an amount comprised within the range of from 1 to 30 % by weight of a mixture (11) to be formed at step (3);
(d) an oligomer selected from the oligovinyl ethers deriving from monomers of type (I), from ethylene-oxide-sequence-containing oligomers or from oligoethylene glycol dialkyl ethers, or a dipolar aprotic liquid in an amount comprised within the range of from 50 to 80% by weight of a mixture (11) to be formed at step (3);
(3) adding mixture (A) to mixture (B), to form mixture (M);
(4) applying the above mixture (M) onto an inert support and
(5) polymerising the mixture (M) for a time comprised within the range of from 0.5 to 30 hours, to form the polymeric electrolyte.

2. Process according to claim 1, in which the polymerisation is carried by exposure to a source of ultraviolet light, the mixture (M) also containing a photoinitiator.

3. Process according to claim 1, in which the polymerisation is carried out by exposure to an electron beam ray source.

4. Process for preparing a solid, polyvinyl ether-based polymeric electrolyte in the form of a membrane, which comprises the steps of:
(1) preparing a mixture (B) which contains:
(a) a vinyl ether of formula
R-[-O-CH₂-CH₂-]ₙ-O-CH=CH₂ (I)
wherein R = methyl or ethyl and n is equal to 5;
(b) a divinyl ether of formula
CH₂=CH-[-O-CH₂-CH₂-]ₘ-O-CH=CH₂ (II)
wherein m is equal to 4, in a molar ratio to the vinyl ether (I) comprised within the range of from 1:4 to 1:2;
(2) preparing a mixture (A), which contains:
(c) a ionic compound, selected among perchlorate, triflate, tetrafluoroborate or hesafluoroarsenate of lithium, in an amount comprised within the range of from 1 to 30 % by weight of a mixture (11) to be formed at step (3);
(d) an oligomer selected from the oligovinyl ethers deriving from monomers of type (I), from ethylene-oxide-sequence-containing oligomers or from oligoethylene glycol dialkyl ethers, or a dipolar aprotic liquid in an amount comprised within the range of from 50 to 80% by weight of a mixture (11) to be formed at step (3);
(3) adding mixture (A) to mixture (B), to form mixture (M);
(4) applying the above mixture (M) onto an inert support and
(5) polymerising the mixture (M) for a time comprised within the range of from 0.5 to 30 hours, to form the polymeric electrolyte, the polymerisation being carried out by exposure to a source of ultraviolet light in presence of a photoinitiator or by exposure to an electron beam ray source.

5. Process according to claim 4, except that n=m=3.

6. Process according to claim 1, in which the molar ratio of the divinyl ether (II) to the vinyl ether (I) is comprised within the range of from 1:4 to 1:2.

7. Process according to claim 1, in which the molar ratio of the divinyl ether (II) to the vinyl ether (I) is comprised within the range of from 9:34 to 9:22.

8. Process according to claim 1, in which the oligomer is selected from oligovinyl ethers deriving from monomers of type (I), oligomers containing ethylene oxide sequences, such as polyethylene glycol, oligoethylene glycol dialkyl ethers, such as tetraglyme.

9. Process according to claim 1, in which the support is a film of an inert plastics material, glass or is the surface of a lithium anode, or of a composite cathode constituted by an oxide or sulfide of a transition metal.

10. Process according to claim 1, in which the dipolar aprotic liquid is propylene carbonate, ethylene carbonate, gamma-butyrolactone, acetonitrile and mixture thereof.

11. Solid, polymeric electrolyte membrane obtainable by means of the process according to one of the preceding claims from 1 to 3, wherein n=5 and m=4, the molar ratio of the divinyl ether (II) to the vinyl ether (I) being comprised within the range of from 1:4 to 1:2 and the dipolar aprotic liquid being comprised within the range of from 50 to 80 % by weight.

12. Solid, polymeric electrolyte membrane obtainable by means of the process according to one of the preceding claims from 1 to 3, wherein n=m=3, the molar ratio of the divinyl ether (II) to the vinyl ether (I) being comprised within the range of from 1:4 to 1:2 and the dipolar aprotic liquid being comprised within the range of from 50 to 80 % by weight.

## Patentansprüche

1. Verfahren zur Herstellung eines festen polymeren Elektrolyten auf Basis von Polyvinylether in Form einer Membran, umfassend die Schritte:
(1) Herstellung eines Gemisches (B) enthaltend:
(a) einen Vinylether der Formel
R-[-O-CH₂CH₂-]ₙ-O-CH-CH₂ (I)
wobei R = eine Methyl- oder Ethylgruppe bedeutet und n eine ganze Zahl im Bereich von 1 bis 16 bedeutet;
(b) einen Divinylether der Formel
CH₂=CH-[-O-CH₂-CH₂-]ₘ-O-CH=CH₂ (II)
wobei m eine ganze Zahl im Bereich von 1 bis 10 bedeutet, in einem Molverhältnis zu dem Vinylether (I) im Bereich von 2 bis 98 bis 60:40;
(2) Herstellung eines Gemisches (A) enthaltend:
(c) Lithiumtetrafluoroborat, als Ionenverbindung, in einer Menge im Bereich von 1 bis 30 Gew.-% eines Gemisches (M), das im Schritt (3) erzeugt wird;
(d) ein Oligomer, ausgewählt aus den Oligovinylethern, die von Monomeren des Typs (I) stammen, Oligomeren, die eine Ethylenoxidsequenz enthalten, oder Oligoethylenglykoldialkylethern oder eine dipolare aprotische Flüssigkeit in einer Menge im Bereich von 50 bis 80 Gew.-% eines Gemisches (M), das im Schritt (3) erzeugt wird;
(3) Zugabe des Gemisches (A) zu dem Gemisch (B), wobei ein Gemisch (M) erzeugt wird;
(4) Auftragen des vorstehenden Gemisches (M) auf einen inerten Träger und
(5) Polymerisieren des Gemisches (M) innerhalb einer Zeit im Bereich von 0,5 bis 30 Stunden, wobei der polymere Elektrolyt erzeugt wird.

2. Verfahren nach Anspruch 1, wobei die Polymerisation durch Belichten mit einer UV-Lichtquelle durchgeführt wird, wobei das Gemisch (M) auch einen Photoinitiator enthält.

3. Verfahren nach Anspruch 1, wobei die Polymerisation durch Bestrahlung mit einer Elektronenstrahlenquelle durchgeführt wird.

4. Verfahren zur Herstellung eines festen polymeren Elektrolyten auf Basis von Polyvinylether in Form einer Membran, umfassend die Schritte:
(1) Herstellung eines Gemisches (B) enthaltend:
(a) einen Vinylether der Formel
R-[-O-CH₂-CH₂-]ₙ-O-CH=CH₂ (I)
wobei R = eine Methyl- oder Ethylgruppe bedeutet und n 5 bedeutet;
(b) einen Divinylether der Formel
CH₂=CH-[-O-CH₂-CH₂-]ₘ-O-CH=CH₂ (II)
wobei m gleich 4 ist, in einem Molverhältnis zu dem Vinylether (I) im Bereich von 1:4 bis 1:2;
(2) Herstellung eines Gemisches (A) enthaltend:
(c) eine Ionenverbindung, ausgewählt aus Lithiumperchlorat, -triflat, -tetrafluoroborat oder -hexafluoroarsenat, in einer Menge im Bereich von 1 bis 30 Gew.-% eines Gemisches (M), das im Schritt (3) erzeugt wird:
(d) ein Oligomer, ausgewählt aus Oligovinylethern, die von Monomeren des Typs (I) stammen, Oligomeren, die eine Ethylenoxidsequenz enthalten, oder Oligoethylenglykoldialkylethern oder eine dipolare aprotische Flüssigkeit im Bereich von 50 bis 80 Gew.-% eines Gemisches (M), das im Schritt (3) erzeugt wird;
(3) Zugabe des Gemisches (A) zu dem Gemisch (B), wobei ein Gemisch (M) erzeugt wird;
(4) Auftragen des vorstehenden Gemisches (M) auf einen inerten Träger und
(5) Polymerisieren des Gemisches (M) innerhalb einer Zeit im Bereich von 0,5 bis 30 Stunden, wobei der polymere Elektrolyt erzeugt wird, und wobei die Polymerisation durch Belichten mit einer UV-Lichtquelle in Gegenwart eines Photoinitiators oder durch Bestrahlen mit einer Elektronenstrahlenquelle durchgeführt wird.

5. Verfahren nach Anspruch 4, ausgenommen, daß n = m = 3 bedeutet.

6. Verfahren nach Anspruch 1, wobei das Molverhältnis des Divinylethers (II) zu dem Vinylether (I) im Bereich von 1:4 bis 1:2 liegt.

7. Verfahren nach Anspruch 1, wobei das Molverhältnis des Divinylethers (II) zu dem Vinylether (I) im Bereich von 9:34 bis 9:22 liegt.

8. Verfahren nach Anspruch 1, wobei das Oligomer aus Oligovinylethem, die von Monomeren des Typs (I) stammen, Oligomeren, die Ethylenoxidsequenzen, wie Polyethylenglykol, enthalten, Oligoethylenglykoldialkylethern, wie Tetraglym, ausgewählt ist.

9. Verfahren nach Anspruch 1, wobei der Träger aus einer Folie aus einem inerten Kunststoffmaterial, Glas oder der Oberfläche einer Lithiumanode oder einer Verbundkathode, die aus einem Oxid oder einem Sulfid eines Übergangsmetalls gebildet ist, besteht.

10. Verfahren nach Anspruch 1, wobei die dipolare aprotische Flüssigkeit Propylencarbonat, Ethylencarbonat, Gamma-Butyrolacton, Acetonitril und ein Gemisch davon ist.

11. Feste polymere Elektrolytmembran, erhältlich nach dem Verfahren gemäß einem der vorstehenden Ansprüche 1 bis 3, wobei n = 5 und m = 4 bedeutet, das Molverhältnis des Divinylethers (II) zu dem Vinylether (I) im Bereich von 1:4 bis 1:2 liegt und die dipolare aprotische Flüssigkeit im Bereich von 50 bis 80 Gew.-% liegt.

12. Feste polymere Elektrolytmembran, erhältlich nach dem Verfahren gemäß einem der vorstehenden Ansprüche 1 bis 3, wobei n = m = 3 bedeutet, das Molverhältnis des Divinylethers (II) zu dem Vinylether (I) im Bereich von 1:4 bis 1:2 liegt und die dipolare aprotische Flüssigkeit im Bereich von 50 bis 80 Gew.-% liegt.

## Revendications

1. Procédé pour préparer un électrolyte solide polymère à base de poly(éther vinylique) sous forme d'une membrane, qui comprend les étapes consistant:
(1) à préparer un mélange (B) qui contient:
(a) un éther vinylique de formule
R-[-O-CH₂-CH₂-]ₙ-O-CH=CH₂ (I)
dans laquelle R représente un groupe méthyle ou éthyle et n est un nombre entier valant de 1 à 16;
(b) un éther divinylique de formule
CH₂=CH-[-O-CH₂-CH₂-]ₘ-O-CH=CH₂ (II)
dans laquelle m est un nombre entier valant de 1 à 10, dans une proportion molaire par rapport à l'éther vinylique (I) comprise entre 2:98 et 60:40;
(2) à préparer un mélange (A), qui contient:
(c) du tétrafluoroborate de lithium, en tant que composé ionique, en une quantité comprise entre 1 et 30% en poids d'un mélange (M) à former au niveau de l'étape (3)
(d) un oligomère choisi parmi les éthers oligovinyliques dérivés des monomères de type (I), des oligomères contenant une séquence d'oxyde d'éthylène ou des éthers dialkyliques d'oligoéthylèneglycol, ou un liquide aprotique dipolaire en une quantité comprise entre 50 et 80% en poids d'un mélange (M) à former au niveau de l'étape (3)
(3) à ajouter le mélange (A) au mélange (B), pour former le mélange (M);
(4) à appliquer le mélange (M) ci-dessus sur un support inerte et
(5) à polymériser le mélange (M) pendant une durée comprise entre 0,5 et 30 heures, pour former l'électrolyte polymère.

2. Procédé selon la revendication 1, dans lequel on réalise la polymérisation par exposition à une source de lumière ultraviolette, le mélange (M) contenant également un photoamorceur.

3. Procédé selon la revendication 1, dans lequel la polymérisation est réalisée par exposition à une source de rayonnement électronique.

4. Procédé de préparation d'une électrolyte solide polymère à base de poly(éther vinylique) sous forme d'une membrane, qui comprend les étapes consistant:
(1) à préparer un mélange (B) qui contient:
(a) un éther vinylique de formule
R-[-O-CH₂-CH₂-]ₙ-O-CH=CH₂ (I)
dans laquelle R représente un groupe méthyle ou éthyle et n vaut 5;
(b) un éther divinylique de formule
CH₂=CH-[-O-CH₂-CH₂-]ₘ-O-CH=CH₂ (II)
dans laquelle m vaut 4, en une proportion molaire par rapport à l'éther vinylique (I) comprise entre 1:4 et 1:2; (2) à préparer un mélange (A) qui contient:
(c) un composé ionique, choisi parmi le perchlorate, le triflate, le tétrafluoroborate ou l'hexafluoroarséniate de lithium, en une quantité comprise entre 1 et 30% en poids d'un mélange (M) à former au niveau de l'étape (3);
(d) un oligomère choisi parmi les éthers oligovinyliques dérivés des monomères de type (I), des oligomères contenant une séquence d'oxyde d'éthylène ou des éthers dialkyliques d'oligoéthylèneglycol, ou un liquide dipolaire aprotique en une quantité comprise entre 50 et 80% en poids d'un mélange (M) à former au niveau de l'étape (3)
(3) à ajouter le mélange (A) au mélange (B) pour former le mélange (M);
(4) à appliquer le mélange (M) ci-dessus sur un support inerte, et
(5) à polymériser le mélange (M) pendant une durée comprise entre 0,5 et 30 heures, pour former l'électrolyte polymère, la polymérisation étant réalisée par exposition à une source de lumière ultraviolette en présence d'un photoamorceur ou par exposition à une source de rayonnement électronique.

5. Procédé selon la revendication 4, sauf que n=m=3.

6. Procédé selon la revendication 1, dans lequel le rapport molaire de l'éther divinylique (II) à l'éther vinylique (I) est compris entre 1:4 et 1:2.

7. Procédé selon la revendication 1, dans lequel le rapport molaire de l'éther divinylique (II) à l'éther vinylique (I) est compris entre 9:34 et 9:22.

8. Procédé selon la revendication 1, dans lequel l'oligomére est choisi parmi les éthers oligovinyliques dérivés des monomères de type (I), des oligomères contenant des séquences d'oxyde d'éthylène, tels que le polyéthylèneglycol, les éthers dialkyliques d'oligoéthylèneglycol, tels que le tétraglyme.

9. Procédé selon la revendication 1, dans lequel le support est un film d'une matière plastique inerte, du verre, ou est la surface d'une anode au lithium, ou d'une cathode composite constituée par un oxyde ou un sulfure d'un métal de transition.

10. Procédé selon la revendication 1, dans lequel le liquide aprotique dipolaire est le carbonate de propylène, le carbonate d'éthylène, la gamma-butyrolactone, l'acétonitrile ou leurs mélanges.

11. Membrane d'un électrolyte solide polymère que l'on peut obtenir à l'aide du procédé selon l'une quelconque des revendications 1 à 3, dans lequel n=5 et m=4, le rapport molaire de l'éther divinylique (II) à l'éther vinylique (I) étant compris entre 1:4 et 1:2 et le liquide aprotique dipolaire étant compris entre 50 et 80% en poids.

12. Membrane d'un électrolyte solide polymère que l'on peut obtenir à l'aide du procédé selon l'une quelconque des revendications 1 à 3, dans lequel n=m=3, le rapport de l'éther divinylique (II) à l'éther vinylique (I) étant compris entre 1:4 et 1:2 et le liquide dipolaire aprotique étant compris entre 50 et 80% en poids.
